# EUROPÄISCHE PATENTANMELDUNG

(11) **EP 3 503 605 A1**
(43) Veröffentlichungstag der Anmeldung: **26.06.2019**
(21) Anmeldenummer: 18000980.5
(22) Anmeldetag: 18.12.2018
(51) Int. Cl.: H04W 8/20, G06K 19/077, G06K 19/08, G06K 19/00

(54) **TEILNEHMER-IDENTIFIKATIONSMODUL FÜR EIN MOBILFUNKNETZ**

(30) Priorität: 22.12.2017 DE 202017006593 U
(71) Anmelder: Giesecke+Devrient Mobile Security GmbH, 81677 München (DE)
(72) Erfinder: Morawietz, Andreas, 81377 München (DE); Nitsch, Nils, 85570 Markt Schwaben (DE); Huber, Ulrich, 81475 München (DE); Wimböck, Ulrich, CA95033 Los Gatos (US)

(57) **Zusammenfassung**

Ein Teilnehmer-Identifikationsmodul für ein Mobilfunknetz umfasst einen Kartenkörper (2) in einem vorgegebenen Format mit darin integriertem Mikrochip (3), in dem digitale Daten zu einer Subskription (SU) gespeichert sind, welche eine Kommunikation im Mobilfunknetz mittels eines ersten Endgeräts (4) ermöglicht, wenn der Mikrochip (3) in das erste Endgerät (4) eingesetzt ist. Der Kartenkörper (2) weist zumindest eine Sollbruchlinie (L1, L2, L3) auf, welche derart ausgestaltet ist, dass ein Nutzer den Kartenkörper (2) durch Krafteinwirkung auf die zumindest eine Sollbruchlinie (L1, L2, L3) auf ein oder mehrere kleinere Formate mit geringeren Abmessungen als das vorgegebene Format verkleinern kann. Auf dem Kartenkörper (2) ist ein Code (CO) mit maschinell auslesbarer Information aufgebracht, wobei mittels der Information die Subskription (SU) auf einem anderen, fest in einem zweiten Endgerät (4') integrierten Teilnehmer-Identifikationsmodul (5) aktivierbar ist, um die Kommunikation im Mobilfunknetz mittels des zweiten Endgeräts (4') zu ermöglichen.

## Beschreibung

Die Erfindung betrifft ein Teilnehmer-Identifikationsmobil für ein Mobilfunknetz sowie ein Endgerät.

Zur Kommunikation in Mobilfunknetzen werden üblicherweise Teilnehmer-Identifikationsmodule verwendet, welche über einen Mikrochip verfügen, der digitale Daten zu einer Subskription enthält, welche eine Kommunikation im Mobilfunknetz mittels eines Endgeräts ermöglicht, in dem der Mikrochip eingesetzt ist.

Herkömmliche Teilnehmer-Identifikationsmodule umfassen einen Kartenkörper, in dem der Mikrochip integriert ist. Der Kartenkörper wird samt dem Mikrochip in eine entsprechende Aufnahme bzw. einen Kartenschlitz im Endgerät eingesetzt, um hierdurch die Kommunikation über das Mobilfunknetz mittels des Endgeräts zu ermöglichen. Dabei sind verschiedene Formate von Kartenkörpern und entsprechenden Aufnahmen in Endgeräten bekannt. Um die Kompatibilität eines Teilnehmer-Identifikationsmoduls mit unterschiedlichen Aufnahmen zu gewährleisten, sind die Kartenkörper von Teilnehmer-Identifikationsmodulen häufig mit Sollbruchlinien versehen, die verschiedenen Formaten von Identifikationsmodulen entsprechen. Durch Herausbrechen des Kartenkörpers entlang einer geeigneten Sollbruchlinie kann dann der Mikrochip in einem Endgerät mit einer Aufnahme im entsprechenden Format genutzt werden.

Neben den oben beschriebenen herkömmlichen Teilnehmer-Identifikationsmodulen gibt es mittlerweile auch sog. eingebettete Teilnehmer-Identifikationsmodule, die fest in einem entsprechenden Endgerät verbaut sind. Um diese Identifikationsmodule zur Kommunikation in einem Mobilfunknetz verwenden zu können, wird drahtlos eine entsprechende Subskription auf das Endgerät heruntergeladen und in dem eingebetteten Teilnehmer-Identifikationsmodul hinterlegt.

Es ist damit zu rechnen, dass zukünftig nur noch eingebettete Teilnehmer-Identifikationsmodule genutzt werden. Dabei besteht das Problem, wie Subskriptionen auf Teilnehmer-Identifikationsmodulen, welche noch über Aufnahmen in Endgeräte eingesetzt werden, auch in neuen Endgeräten mit eingebetteten Teilnehmer-Identifikationsmodulen verwendet werden können.

Aufgabe der Erfindung ist es, ein Teilnehmer-Identifikationsmodul für ein Mobilfunknetz zu schaffen, dessen Subskription auf einfache Weise auf Endgeräte mit eingebettetem Identifikationsmodul übertragbar ist.

Diese Aufgabe wird durch das Teilnehmer-Identifikationsmodul gemäß Schutzanspruch 1 gelöst. Weiterbildungen der Erfindung sind in den abhängigen Ansprüchen definiert.

Das erfindungsgemäße Teilnehmer-Identifikationsmodul umfasst einen Kartenkörper (vorzugsweise aus Kunststoff) in einem vorgegebenen Format mit darin integriertem Mikrochip. Insbesondere handelt es sich bei dem Identifikationsmodul um eine SIM-Karte (SIM = Subscriber Identity Module) bzw. eine UICC (UICC = Universal Integrated Circuit Card). In dem Mikrochip sind digitale Daten zu einer Subskription gespeichert, welche eine Kommunikation im Mobilfunknetz mittels eines ersten Endgeräts ermöglicht, wenn der Mikrochip in das erste Endgerät eingesetzt ist. Unter einem ersten Endgerät ist dabei ein Endgerät zu verstehen, welches mit einem Teilnehmer-Identifikationsmodul betrieben werden kann, das in das Endgerät eingesetzt wird, vorzugsweise durch Einschieben in einen geeigneten Kartenschlitz. Hier und im Folgenden ist unter dem Begriff eines Endgeräts eine durch einen Nutzer bedienbare Kommunikationseinrichtung zur Kommunikation mit anderen Kommunikationseinrichtungen über ein Mobilfunknetz zu verstehen. Vorzugsweise ist das Endgerät dabei ein mobiles Endgerät, wie z.B. ein Mobiltelefon, ein Laptop, ein Tablet und dergleichen.

Der Kartenkörper des erfindungsgemäßen Teilnehmer-Identifikationsmoduls umfasst zumindest eine Sollbruchlinie, welche derart ausgestaltet ist, dass ein Nutzer den Kartenkörper durch Krafteinwirkung auf die zumindest eine Sollbruchlinie auf ein oder mehrere kleinere Formate mit geringeren Abmessungen als das vorgegebene Format verkleinern kann. Auf diese Weise wird die Kompatibilität des Teilnehmer-Identifikationsmoduls mit verschiedenartigen Endgeräten gewährleistet, welche unterschiedliche Formate des Kartenkörpers zum Einsetzen des Mikrochips in das Endgerät erfordern.

Das erfindungsgemäße Teilnehmer-Identifikationsmodul zeichnet sich dadurch aus, dass irgendwo auf dem Kartenkörper ein Code, insbesondere ein sichtbarer bzw. optischer Code, mit maschinell auslesbarer Information aufgebracht ist. Vorzugsweise ist dieser Code auf dem Kartenkörper aufgedruckt. Mittels der Information, die über ein geeignetes Lesegerät (insbesondere ein optisches Lesegerät, wie z.B. eine Kamera oder einen Scanner) ausgelesen werden kann, ist die Subskription des Teilnehmer-Identifikationsmoduls auf einem anderen, fest in einem zweiten Endgerät integrierten Teilnehmer-Identifikationsmodul aktivierbar, um die Kommunikation im Mobilfunknetz mittels des zweiten Endgeräts zu ermöglichen.

Mit anderen Worten kann die Subskription über das Auslesen der Codeinformation auf einfache Weise in solchen Endgeräten verwendet werden, die über ein fest integriertes Teilnehmer-Identifikationsmodul verfügen. Bei einem solchen fest integrierten Teilnehmer-Identifikationsmodul handelt es sich vorzugsweise um eine eSIM (eSIM = embedded Subscriber Identity Module) bzw. eine eUICC (eUICC = embedded Universal Integrated Circuit Card oder iUICC = integrated Universal Integrated Circuit Card). Vorzugsweise wird die Aktivierung der Subskription in dem zweiten Endgerät dadurch erreicht, dass eine Identifikation, die in der ausgelesenen Information enthalten ist, an einen Server gesendet wird, der über die Identifikation die Subskription ermittelt. Die digitalen Daten der Subskription werden anschließend auf das zweite Endgerät heruntergeladen und dort im fest integrierten Teilnehmer-Identifikationsmodul hinterlegt.

Das erfindungsgemäße Teilnehmer-Identifikationsmodul weist den Vorteil auf, dass durch die Anbringung eines Codes auf dem Kartenkörper des Identifikationsmoduls eine Möglichkeit geschaffen wird, die Subskription des Identifikationsmoduls auch in solchen Endgeräten zu nutzen, die über ein fest integriertes Teilnehmer-Identifikationsmodul verfügen. Auf diese Weise kann ein Nutzer problemlos von einem alten Endgerät, in dem noch ein Teilnehmer-Identifikationsmodul eingesetzt werden muss, auf ein neues Endgerät mit integriertem Identifikationsmodul wechseln, ohne dass er eine neue Subskription erwerben muss.

Je nach Ausgestaltung kann der Kartenkörper des erfindungsgemäßen Teilnehmer-Identifikationsmoduls ein unterschiedliches Format aufweisen. Insbesondere kann das vorgegebene Format das sog. ID-1-Format sein, welches auch als Formfaktor 1FF bezeichnet wird und einer sog. Full-Size-SIM-Karte entspricht. Ebenso kann das vorgegebene Format das sog. Mini-SIM-Format sein, das auch als ID-000-Format bzw. UICC-Format bzw. Formfaktor 2FF bezeichnet wird. Ebenso kann das vorgegebene Format das sog. Micro-SIM-Format sein, das auch als Mini-UICC-Format bzw. Formfaktor 3FF bezeichnet wird. Ebenso ist es möglich, dass das vorgegebene Format das sog. Nano-SIM-Format ist, das auch als Formfaktor 4FF bezeichnet wird. Alle genannten Formate sind dem Fachmann geläufig und werden in entsprechenden Standards beschrieben (ISO/IEC 7810:2003, ETSI TS 102 221).

In einer bevorzugten Ausgestaltung des erfindungsgemäßen Teilnehmer-Identifikationsmoduls ist der Code ein Barcode und/oder ein QR-Code. Diese Codes können auf einfache Weise mittels gängiger Technologien, wie z.B. einer Kamera, erfasst und ausgelesen werden.

In einer weiteren bevorzugten Variante des erfindungsgemäßen Identifikationsmoduls weist der Kartenkörper eine Vorderseite und eine gegenüber liegende Rückseite auf, wobei auf der Vorderseite eine Kontaktfläche zur Kontaktierung des Mikrochips vorgesehen ist. Über diese Kontaktfläche können die digitalen Daten auf dem Mikrochip ausgelesen werden, wenn dieser in einem entsprechenden ersten Endgerät eingesetzt ist. Je nach Ausgestaltung kann der Code dabei auf der Vorderseite und/oder auf der Rückseite des Kartenkörpers aufgebracht sein. Mit anderen Worten kann der Code entweder auf der Vorderseite oder auf der Rückseite vorgesehen sein oder der Code kann redundant sowohl auf der Vorderseite als auch auf der Rückseite aufgebracht sein.

In einer besonders bevorzugten Ausführungsform befindet sich der Code auf der Rückseite des Kartenkörpers in einem Bereich innerhalb des kleinsten des oder der kleineren Formate, auf welche das Teilnehmer-Identifikationsmodul über die zumindest eine Sollbruchlinie verkleinert werden kann. Auf diese Weise wird sichergestellt, dass der Code immer verfügbar ist, selbst wenn das Teilnehmer-Identifikationsmodul durch den Nutzer auf ein sehr kleines Format verkleinert wird.

Je nach Ausgestaltung kann die zumindest eine Sollbruchlinie auf unterschiedliche Weise im Kartenkörper vorgesehen sein. Vorzugsweise ist die zumindest eine Sollbruchlinie durch eine Ausstanzung im Kartenkörper gebildet, wodurch ein einfaches Herausbrechen des entsprechenden Formats durch die Hände des Nutzers ermöglicht wird.

In einer weiteren bevorzugten Ausgestaltung ist das vorgegebene Format des Teilnehmer-Identifikationsmoduls das ID-1-Format und das oder die kleineren Formate umfassen eines oder mehrere und vorzugsweise alle der folgenden Formate:
- das Mini-SIM-Format;
- das Micro-SIM-Format;
- das Nano-SIM-Format.

Auf diese Weise können alle gängigen Formate in einem einzelnen Teilnehmer-Identifikationsmodul realisiert werden.

In einer weiteren Ausgestaltung ist das vorgegebene Format des Teilnehmer-Identifikationsmoduls das Mini-SIM-Format und das oder die kleineren Formate umfassen eines oder mehrere und vorzugsweise alle der folgenden Formate:
- das Micro-SIM-Format;
- das Nano-SIM-Format.

Gegebenenfalls kann das vorgegebene Format des Teilnehmer-Identifikationsmoduls auch das Micro-SIM-Format sein, wobei das oder die kleineren Formate das Nano-SIM-Format umfassen.

Neben dem oben beschriebenen Teilnehmer-Identifikationsmodul betrifft die Erfindung ferner ein Endgerät zur Kommunikation in einem Mobilfunknetz. Das Endgerät ist dabei dazu eingerichtet, die Information des Codes eines erfindungsgemäßen Teilnehmer-Identifikationsmoduls bzw. einer bevorzugten Ausführungsform eines solchen Identifikationsmoduls maschinell auszulesen. Das heißt, das Endgerät umfasst ein geeignetes Lesegerät, insbesondere ein optisches Lesegerät, wie z.B. eine Kamera bzw. einen Scanner.

Das Endgerät ist ferner dazu eingerichtet, mittels der maschinell ausgelesenen Information die Subskription gemäß den digitalen Daten im Mikrochip des erfindungsgemäßen Teilnehmer-Identifikationsmoduls bzw. der entsprechenden bevorzugten Variante dieses Identifikationsmoduls auf einem anderen, fest in dem Endgerät integrierten Teilnehmer-Identifikationsmodul zu aktivieren, um die Kommunikation im Mobilfunknetz mittels des Endgeräts zu ermöglichen. Mit anderen Worten stellt das Endgerät ein Endgerät dar, das im Vorangegangenen als zweites Endgerät bezeichnet wurde. Vorzugsweise erfolgt die Aktivierung der Subskription derart, dass das Endgerät eine Identifikation, die in der ausgelesenen Information enthalten ist, an einen Server übermittelt, der daraufhin die geeignete Subskription ermittelt, deren digitale Daten anschließend auf das Endgerät heruntergeladen werden und dort in dem fest integrierten Teilnehmer-Identifikationsmodul gespeichert werden.

Ein Ausführungsbeispiel der Erfindung wird nachfolgend anhand der beigefügten Figuren detailliert beschrieben.

Es zeigen:
- Fig. 1: eine schematische Draufsicht auf eine Ausführungsform eines erfindungsgemäßen Teilnehmer-Identifikationsmoduls; und
- Fig. 2: eine schematische Darstellung, welche die Verwendung des Teilnehmer-Identifikationsmoduls aus Fig. 1 mit zwei verschiedenen Arten von Endgeräten verdeutlicht.

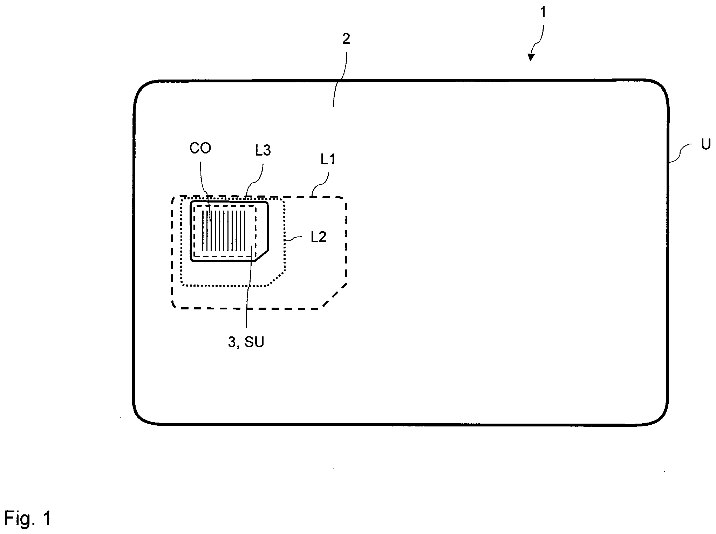

Nachfolgend wird eine Ausführungsform der Erfindung anhand eines Teilnehmer-Identifikationsmoduls in der Form einer SIM-Karte 1 beschrieben. Die SIM-Karte 1 umfasst einen Kartenkörper 2 aus Kunststoff, wobei in Fig. 1 die Draufsicht auf die Vorderseite des Kartenkörpers gezeigt ist. Unter der Vorderseite ist dabei diejenige Seite zu verstehen, auf der eine Kontaktfläche eines in dem Kartenkörper 1 integrierten Mikrochips 3 freigelegt ist. Der Mikrochip 3 ist in Fig. 1 schematisch als Rechteck mit einem gestrichelten Umriss wiedergegeben. Der Mikrochip enthält digitale Daten zu einer Subskription SU, welche die Kommunikation in einem Mobilfunknetz ermöglicht, wenn der Mikrochip in ein entsprechendes Mobilfunkgerät eingesetzt wird. Gemäß der Ausführungsform der Fig. 1 stellt das durch den Umriss U des Kartenkörpers 2 beschriebene Format das ID-1-Format einer Full-Size-SIM-Karte dar.

Der Kartenkörper 2 umfasst mehrere Sollbruchlinien L1, L2 und L3, die in an sich bekannter Weise durch Ausstanzungen im Kartenkörper gebildet sind. Über diese Ausstanzungen kann das ursprüngliche Format der SIM-Karte 1 auf Formate mit kleineren Abmessungen verkleinert werden, indem ein Teil des Kartenkörpers durch den Nutzer entlang der entsprechenden Sollbruchlinie bzw. Ausstanzung aus dem Rest der Karte herausgebrochen wird. Die durch eine gestrichelte Linie dargestellte Sollbruchlinie L1 beschreibt dabei das Mini-SIM-Format, die durch eine gepunktete Linie dargestellte Sollbruchlinie L2 das Micro-SIM-Format und die durch eine durchgezogene Linie dargestellte Sollbruchlinie L3 das Nano-SIM-Format. Je nachdem, für welches Format ein entsprechendes Endgerät konzipiert ist, kann der Nutzer den Mikrochip 3 im geeigneten Format aus dem ursprünglichen Kartenkörper 2 entfernen und dann in einen dafür vorgesehenen Kartenschlitz des Endgeräts einsetzen, woraufhin er das Endgerät zur Mobilfunktelefonie nutzen kann.

Die in Fig. 1 gezeigte SIM-Karte 1 unterscheidet sich von herkömmlichen SIM-Karten dahingehend, dass auf der Rückseite der Karte, d.h. auf der Seite, welche der Vorderseite mit der Kontaktfläche des Mikrochips 3 gegenüber liegt, ein maschinenlesbarer Code CO aufgebracht ist. Dieser Code ist in Fig. 1 rein schematisch durch eine Mehrzahl von vertikal verlaufenden Linien angedeutet. Vorzugsweise handelt es sich bei dem Code um einen Barcode oder einen QR-Code. Der Code CO ist in dem gezeigten Ausführungsbeispiel in einem Bereich auf der Rückseite der Karte ausgebildet, der in Draufsicht auf den Kartenkörper innerhalb des Flächenabschnitts liegt, in dem sich der Mikrochip 3 befindet. Somit steht der Code immer zur Verfügung, unabhängig davon, auf welches Format die SIM-Karte 1 durch Herausbrechen entlang einer geeigneten Sollbruchlinie verkleinert wird. Alternativ kann der Code an jeder beliebigen Stelle auf der Vorderseite und/oder der Rückseite des Kartenkörpers angeordnet sein.

Mittels des Codes CO hat nunmehr ein Nutzer, der die Subskription SU in einem Endgerät mit einer eSIM bzw. e/iUICC nutzen möchte, die Möglichkeit, diese Subskription auf der eSIM zu aktivieren. Ebenso kann der Nutzer die Subskription SU weiterhin in einem Endgerät nutzen, in das er den Mikrochip 3 über einen geeigneten Kartenschlitz eingesetzt hat.

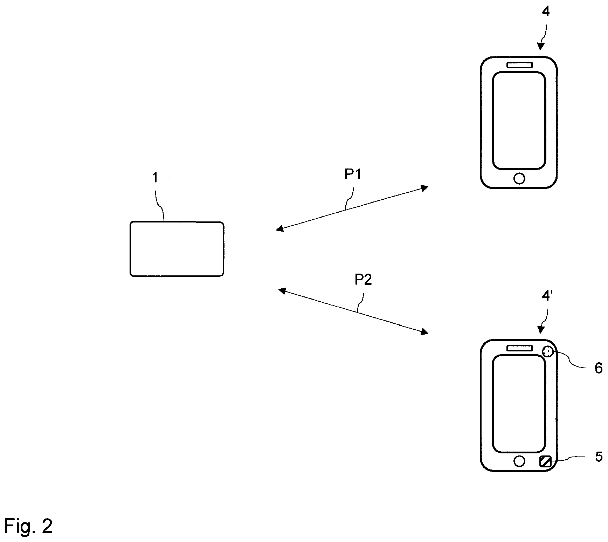

Die obigen Nutzungsszenarien werden im Folgenden anhand von Fig. 2 näher erläutert. In dieser Figur ist die SIM-Karte aus Fig. 1 lediglich schematisch wiedergegeben, ohne dass die entsprechenden Sollbruchlinien sowie der darin integrierte Mikrochip und der aufgebrachte Code gezeigt sind. Gemäß Fig. 2 repräsentiert der Doppelpfeil P1 die Verwendung der SIM-Karte 1 in einem Endgerät 4 mit einem (nicht gezeigten) Kartenschlitz zum Einsetzen des Mikrochips, wohingegen der Doppelpfeil P2 die Nutzung der SIM-Karte 1 für ein Endgerät 4' mit einer embedded SIM andeutet. Bei beiden Endgeräten 4 und 4' handelt es sich im hier beschriebenen Ausführungsbeispiel um Mobiltelefone. Das Endgerät 4' enthält eine schematisch angedeutete Kamera 6 sowie die bereits oben erwähnte embedded SIM 5, die auch nur schematisch dargestellt ist.

Gemäß dem Szenario des Doppelpfeils P1 kann ein Nutzer die SIM-Karte 1 in dem Endgerät 4 verwenden, indem er das Format entsprechend dem im Endgerät 4 vorgesehenen Kartenschlitz herausbricht und den herausgebrochenen Teil in den Kartenschlitz einführt. Hierdurch kann der Nutzer die Subskription SU auf einem gängigen Mobiltelefon nutzen. Darüber hinaus hat der Nutzer gemäß dem Szenario des Doppelpfeils P2 die Möglichkeit, die Subskription SU auf dem Mobiltelefon 4' mit der eSIM 5 zu verwenden. Hierfür liest der Nutzer mit der Kamera 6 des Endgeräts 4' den Code CO auf der Rückseite der Karte 1 ein. Der Code enthält dabei eine Matching-ID, die durch das Auslesen gewonnen wird. Diese Matching-ID wird anschließend von dem Endgerät 4' drahtlos zu einem (nicht gezeigten) SM-DP-Server (SM-DP = Subscription-Manager Data-Preparation) übermittelt. Über die Matching-ID wird auf dem Server die Subskription SU ermittelt, die auch auf der SIM-Karte 1 hinterlegt ist. Anschließend wird diese Subskription SU drahtlos an das Endgerät 4' übermittelt und dort in der eSIM 5 gespeichert, so dass die Subskription in der eSIM aktiviert ist und somit das Endgerät 4' zur Kommunikation im Mobilfunknetz verwendet werden kann.

Die im Vorangegangenen beschriebene Ausführungsform der Erfindung weist eine Reihe von Vorteilen auf. Insbesondere kann ein Teilnehmer-Identifikationsmodul bzw. eine SIM-Karte in Endgeräten mit Kartenschlitzen unterschiedlicher Größe genutzt werden, was durch entsprechende Sollbruchlinien im Kartenkörper erreicht wird. Darüber hinaus kann die Subskription, die auf der SIM-Karte hinterlegt ist, auch in einem Endgerät mit eSIM verwendet werden, was über das maschinelle Auslesen der Information eines Codes ermöglicht wird, der auf dem Kartenkörper der SIM-Karte aufgebracht ist. Ein Nutzer kann somit die von ihm erworbene Subskription sowohl für Endgeräte mit Kartenschlitz als auch für Endgeräte mit eSIM verwenden. Speziell in der Einführungs- bzw. Migrationsphase der eSIM-Technologie wird hierdurch eine Vereinfachung für Endkunden geschaffen, die mit Hilfe des Codes auf einer SIM-Karte eine Subskription auf ein Neugerät mit eSIM übertragen können.
- 1: SIM-Karte
- 2: Kartenkörper
- 3: Mikrochip
- 4, 4': Endgeräte
- 5: embedded SIM
- 6: Kamera
- U: Umriss
- CO: Code
- SU: Subskription
- L1, L2, L3: Sollbruchlinien
- P1, P2: Doppelpfeile

## Patentansprüche

1. Teilnehmer-Identifikationsmodul für ein Mobilfunknetz, umfassend einen Kartenkörper (2) in einem vorgegebenen Format mit darin integriertem Mikrochip (3), in dem digitale Daten zu einer Subskription (SU) gespeichert sind, welche eine Kommunikation im Mobilfunknetz mittels eines ersten Endgeräts (4) ermöglicht, wenn der Mikrochip (3) in das erste Endgerät (4) eingesetzt ist, wobei der Kartenkörper (2) zumindest eine Sollbruchlinie (L1, L2, L3) aufweist, welche derart ausgestaltet ist, dass ein Nutzer den Kartenkörper (2) durch Krafteinwirkung auf die zumindest eine Sollbruchlinie (L1, L2, L3) auf ein oder mehrere kleinere Formate mit geringeren Abmessungen als das vorgegebene Format verkleinern kann,
**dadurch gekennzeichnet, dass**
auf dem Kartenkörper (2) ein Code (CO) mit maschinell auslesbarer Information aufgebracht ist, wobei mittels der Information die Subskription (SU) auf einem anderen, fest in einem zweiten Endgerät (4') integrierten Teilnehmer-Identifikationsmodul (5) aktivierbar ist, um die Kommunikation im Mobilfunknetz mittels des zweiten Endgeräts (4') zu ermöglichen.

2. Teilnehmer-Identifikationsmodul nach Anspruch 1, **dadurch gekennzeichnet, dass** das vorgegebene Format das ID-1-Format oder das Mini-SIM-Format oder das Micro-SIM-Format oder das Nano-SIM-Format ist.

3. Teilnehmer-Identifikationsmodul nach Anspruch 1 oder 2, **dadurch gekennzeichnet, dass** der Code (CO) ein Barcode und/oder QR-Code ist.

4. Teilnehmer-Identifikationsmodul nach einem der vorhergehenden Ansprüche, **dadurch gekennzeichnet, dass** der Kartenköper (2) eine Vorderseite und eine gegenüberliegende Rückseite aufweist, wobei auf der Vorderseite eine Kontaktfläche zur Kontaktierung des Mikrochips (3) vorgesehen ist, wobei der Code (CO) auf der Vorderseite und/ oder der Rückseite aufgebracht ist.

5. Teilnehmer-Identifikationsmodul nach Anspruch 3, **dadurch gekennzeichnet, dass** sich der Code (CO) auf der Rückseite des Kartenkörpers (2) in einem Bereich innerhalb des kleinsten des oder der kleineren Formate befindet.

6. Teilnehmer-Identifikationsmodul nach einem der vorhergehenden Ansprüche, **dadurch gekennzeichnet, dass** die zumindest eine Sollbruchlinie (L1, L2, L3) durch eine Ausstanzung im Kartenkörper (2) gebildet ist.

7. Teilnehmer-Identifikationsmodul nach einem der vorhergehenden Ansprüche, **dadurch gekennzeichnet, dass** das vorgegebene Format das ID-1-Format ist und das oder die kleineren Formate eines oder mehrere und vorzugsweise alle der folgenden Formate umfassen:
- das Mini-SIM-Format;
- das Micro-SIM-Format;
- das Nano-SIM-Format.

8. Teilnehmer-Identifikationsmodul nach einem der Ansprüche 1 bis 6, **dadurch gekennzeichnet, dass** das vorgegebene Format das Mini-SIM-Format ist und das oder die kleineren Formate eines oder mehrere und vorzugsweise alle der folgenden Formate umfassen:
- das Micro-SIM-Format;
- das Nano-SIM-Format.

9. Teilnehmer-Identifikationsmodul nach einem der Ansprüche 1 bis 6, **dadurch gekennzeichnet, dass** das vorgegebene Format das Micro-SIM-Format ist und das oder die kleineren Formate das Nano-SIM-Format umfassen.

10. Endgerät zur Kommunikation in einem Mobilfunknetz, **dadurch gekennzeichnet, dass** das Endgerät (4') dazu eingerichtet ist, die Information des Codes (CO) eines Teilnehmer-Identifikationsmoduls (1) nach einem der Ansprüche 1 bis 9 auszulesen und mittels der Information die Subskription (SU) gemäß den digitalen Daten im Mikrochip (3) des Teilnehmer-Identifikationsmoduls (1) auf einem anderen, fest in dem Endgerät (4') integrierten Teilnehmer-Identifikationsmodul (5) zu aktivieren, um die Kommunikation im Mobilfunknetz mittels des Endgeräts (4') zu ermöglichen.
